# EUROPÄISCHE PATENTSCHRIFT

(11) **EP 0 527 442 B1**
(45) Veröffentlichungstag und Bekanntmachung des Hinweises auf die Patenterteilung: **28.02.1996**
(21) Anmeldenummer: 92113468.0
(22) Anmeldetag: 07.08.1992
(51) Int. Cl.: C07F 9/38

(54) **Verfahren zur Reingewinnung von Propanphosphonsäureanhydrid**
Method for the purification of propane phosphonic acid anhydride
Méthode pour la purification de l'anhydride de l'acide propane-phosphonique

(30) Priorität: 08.08.1991 DE 4126235
(43) Veröffentlichungstag der Anmeldung: 17.02.1993
(73) Patentinhaber: HOECHST AKTIENGESELLSCHAFT, D-65926 Frankfurt am Main (DE)
(72) Erfinder: Roscher, Günter, Dr., W-6233 Kelkheim am Taunus (DE); Kleiner, Hans-Jerg, Dr., W-6242 Kronberg/Taunus (DE); Berger, Harald, Dr., W-6233 Kelkheim am Taunus (DE); Schmidt, Manfred, Dr., W-6233 Kelkheim am Taunus (DE); Uhmann, Rainer, Dr., W-6239 Kriftel/Taunus (DE); Böttger, Dirk, Dr., W-6274 Hünstetten (DE)

(56) Entgegenhaltungen:
- EP-A- 0 014 834
- EP-A- 0 015 483

## Beschreibung

Die Erfindung betrifft ein Verfahren zur Reingewinnung von Propanphosphonsäureanhydrid durch Destillation.

Propanphosphonsäureanhydrid ist ein wertvolles Zwischenprodukt. Es wird beispielsweise zur Herstellung von Flammschutzmitteln, zum Korrosionsschutz von Metallen, für die Komplexbildung mit Metallen, zur Verknüpfung von Peptiden oder auch als Vernetzer für Polymere verwendet. Für viele der genannten Anwendungszwecke ist es notwendig, möglichst farbloses, reines Propanphosphonsäureanhydrid einzusetzen. Das heißt, das Propanphosphonsäureanhydrid muß im allgemeinen 95 Gew.-%, zumindest aber mehr als 85 Gew.-% der genannten Komponente enthalten, wobei der Rest keine farbintensiven Verunreinigungen enthalten darf. Das Propanphosphonsäureanhydrid ist dabei keine Verbindung mit definierter Molekülgröße, d.h. definiertem Polymerisationsgrad, sondern ein Gemisch von durch Wasserabspaltung aus den Propanphosphonsäuregruppen gebildeter polymolekularer Anhydride unterschiedlicher Kettenlänge, wobei auch ringförmige Anhydride enthalten sein können.

Zur Herstellung von Alkanphosphonsäureanhydriden sind unterschiedliche Methoden bekannt. Besonders interessant sind dabei solche Verfahren, die von Phosphonsäuren ausgehen. Es ist hierbei bekannt, Phosphonsäuren zuerst mit Phosphortrichlorid, Thionylchlorid oder Phosgen in das Phosphonsäuredichlorid zu überführen und dann das leichtsiedende Propanphosphonsäuredichlorid destillativ zu reinigen. Dieses wird anschließend mit der stöchiometrischen Menge Wasser oder auch mit Propanphosphonsäure zu Propanphosphonsäureanhydrid und Chlorwasserstoff umgesetzt. Wegen des Einsatzes von Chlorierungsmitteln und des zwangsläufigen Anfalls an Chlorwasserstoff stößt diese Methode auf technische Schwierigkeiten.

In der US-PS 41 95 035 wird im Beispiel 2 ein Verfahren zur Herstellung von Propanphosphonsäureanhydrid beschrieben, wobei Propanphosphonsäure bei einem Druck von 25 Torr auf 360 bis 420°C erhitzt wird. Dabei wird in einer Zeitreaktion Wasser abgespalten, das zusammen mit dem durch die Wasserabspaltung gebildeten niedermolekularen Propanphosphonsäureanhydrid abdestilliert. Dieses Verfahren ist technisch nur schwierig und mit hohem Aufwand zu realisieren. Bei der für die Wasserabspaltung erforderlichen hohen Temperatur ist wegen der Korrosionsaggressivität des Mediums praktisch kein Apparatematerial auf Dauer beständig. Weiterhin kommt es beim Kondensieren von zusammen mit abgespaltenem Wasser überdestillierendem Propanphosphonsäureanhydrid im Kondensationsschritt zwangsläufig zur teilweisen Rückreaktion des gebildeten Propanphosphonsäureanhydrids mit dem abgespaltenen gasförmigen Wasser, so daß das gebildete Propanphosphonsäureanhydrid stets Anteile zurückgebildeter Propanphosphonsäure enthält. Bei dem sich in der ersten Stufe bildenden Propanphosphonsäureanhydrid, das zusammen mit dem abgespaltenen Wasser überdestilliert, handelt es sich wahrscheinlich um ringförmige, niedermolekulare Verbindungen. Darüberhinaus erfordert dieses Verfahren den Einsatz von relativ reiner Propanphosphonsäure, weil enthaltene Nebenprodukte bei den für die Wasserabspaltung notwendigen hohen Temperaturen mit überdestillieren und damit das erhaltene Propanphosphonsäureanhydrid verunreinigen.

Durch die vorliegende Erfindung wird nunmehr ein Verfahren zur Reingewinnung von Propanphosphonsäureanhydrid bereitgestellt, bei dem die genannten Nachteile der üblichen Verfahren nicht mehr auftreten.

Es wurde nun gefunden, daß man verunreinigtes polymolekulares Propanphosphonsäureanhydrid unter bestimmten Bedingungen als niedermolekulares cyclisches Propanphosphonsäureanhydrid destillieren kann, das beim Kondensieren der Brüden wieder in höhermolekulares, gereinigtes Propanphosphonsäureanhydrid übergeht.

Die Erfindung betrifft daher ein Verfahren zur Reingewinnung von Propanphosphonsäureanhydrid, das dadurch gekennzeichnet ist, daß man rohes, verunreinigtes Propanphosphonsäureanhydrid mit einem mittleren Polymerisationsgrad von 20 bis 200, das weniger als 0,5 Gew.-% Wasser enthält, durch Erhitzen auf 230 bis 300°C bei einem Druck von 0,1 bis 100 mbar destilliert, wobei Propanphosphonsäureanhydrid mit einem mittleren Polymerisationsgrad von 20 bis 60, vorzugsweise 25 bis 40, erhalten wird.

Das so gereinigte Propanphosphonsäureanhydrid fällt als farbloses Destillat in einer Reinheit von über 90 bis 95 Gew.-% an.

Das erfindungsgemäße Verfahren wird vorzugsweise bei Temperaturen von 250 bis 290°C, insbesondere von 260 bis 280°C, und bei Drucken von vorzugsweise 1 bis 30 mbar durchgeführt.

Der Wasseranteil des rohen Propanphosphonsäureanhydrids liegt im allgemeinen unter 0,2 Gew.-%, insbesondere unter 0,1 Gew.-%.

In einer bevorzugten Ausführungsform wird als rohes Propanphosphonsäureanhydrid ein solches eingesetzt, wie es nach dem Verfahren der DE-OS 27 58 580 anfällt. Bei diesem Verfahren wird Propanphosphonsäure mit Essigsäureanhydrid umanhydrisiert. Das rohe Propanphosphonsäureanhydrid kann jedoch auch nach jedem anderen üblichen Verfahren hergestellt werden.

Es ist besonders überraschend, daß polymolekulares Propanphosphonsäureanhydrid, das nicht destillierbar und thermisch sehr stabil ist, beim Erhitzen unter den erfindungsgemäßen Bedingungen destillierbares niedermolekulares cyclisches Propanphosphonsäureanhydrid bildet, das jedoch beim Kondensieren der Brüden wieder in höhermolekulares Propanphosphonsäureanhydrid übergeht. Daß eine Depolymerisierung zu destillierbaren niedermolekularen Einheiten nicht zu erwarten war, geht auch aus Seite 12 der DE-OS 27 58 580 hervor, wonach dunkel gefärbte Anhydride dann brauchbar sind, wenn nach ihrer chemischen Umsetzung die entstehenden Folgeprodukte destillierbar sind. Anderseits schlägt die EP-A-14834 die Reinigung von Alkanphosphonsäureanhydrid mit Hilfe einer Vakuumdistillation vor. Es gibt jedoch keine Angaben über die einzuhaltenden Destillationsbedingungen.

### Beispiele

1. In einem 400 l Emailrührkessel mit Dampfbeheizung im Mantel und aufgesetzter Glaskolonne (Durchmesser 100 mm, Länge 4 m, Füllung 12 mm Glasspiralen) mit automatischem Rücklaufteiler, Destillatvorlagen, Kühlfalle und Vakuumanschluß werden 70 kg 90 %ige Propanphosphonsäure mit einem Wassergehalt von über 0,5 % und 275 kg Essigsäureanhydrid vorgelegt. Nach Erwärmen auf Siedetemperatur destillieren bei einem Rücklaufverhältnis von 8 70 kg Essigsäure ab, die weniger als 5 % Essigsäureanhydrid enthält. Dann wird die Kesselinnentemperatur auf 150°C erhöht und das Rücklaufverhältnis auf 1 reduziert. Nach Erreichen einer Sumpftemperatur von 150°C wird der Druck sukzessive vermindert, bis bei einer Kesselinnentemperatur von 150°C und einem Druck von 10 mbar kein Destillat mehr anfällt. Zusammen mit dem Produkt in der Kühlfalle fallen insgesamt 200 kg Destillat an. Dieses enhält über 90 % Essigsäureanhydrid und weniger als 10 % Essigsäure. Als Rückstand verbleiben 67 kg rohes Propanphosphonsäureanhydrid. Dieses stark dunkel gefärbte polymere Propanphosphonsäureanhydrid mit einem Polymerisationsgrad von 20 bis 200 ist laut P-NMR 76 %ig. Der Propanphosphonsäureanteil liegt bei 4 %. Der Rest sind analytisch nicht aufgeklärte Nebenkomponenten, die die starke Färbung bewirken.
   In einem 50 l ®Hastelloy-Rührkessel mit Mantel, der mit Wärmeübertragungsöl im Zwangsumlauf beheizt wurde, Kondensator mit Destillatvorlage und Vakuumanschluß wurden 40 kg des rohen, stark dunkel gefärbten Propanphosphonsäureanhydrids mit einem Wassergehalt von weniger als 0,05 %vorgelegt. Nach Anlegen eines Unterdrucks von 10 mbar wurde der Kesselinhalt erhitzt. Bei einer Kesselinnentemperatur von 270°C fielen in der Destillatvorlage 30 kg farbloses Destillat an, das bei Raumtemperatur erstarrte. Das Destillat enthielt nach Phosphor-NMR-Analyse 95 Gew.-% Propanphosphonsäureanhydrid mit einem mittleren Polymerisationsgrad von ca. 30. Die Destillierzeit betrug 1 Stunde.
2. Es wurde wie im Beispiel 1 verfahren, nur daß zur Herstellung des rohen Propanphosphonsäureanhydrids Propanphosphonsäure eingesetzt wurde, die nur ca. 65 %ig war und neben undefinierten Verbindungen größere Mengen unterschiedlicher Phosphonsäuren enthielt. Das durch Umanhydridisierung mit Essigsäureanhydrid erhaltene, teerartige rohe Propanphosphonsäureanhydrid mit einem Wassergehalt von weniger als 0,05 % und einem mittleren Polymerisationsgrad von 150 war laut Phosphor-NMR-Analyse 58 %ig. Unter den Bedingungen von Beispiel 1 wurden aus 40 kg Rohanhydrid 24,5 kg farbloses Destillat erhalten, das laut Phosphor-NMR-Analyse 91 Gew.-% Propanphosphonsäureanhydrid mit einem mittleren Polymerisationsgrad von ca. 30 enthielt.

### Vergleichsbeispiel

Die Kesselbeheizung im Mantel des Hastelloy-Rührkessels wurde von normalem Wärmeübertragungsöl, dessen Temperaturbereich bis 300°C reicht, auf ®Diphyl umgestellt und unter erhöhtem Druck betrieben, um Kesselinnentemperaturen über 300°C erreichen zu können.

In den Kessel wurden 40 kg 90 %ige Propanphosphonsäure eingefüllt, die stark gefärbt war. Nach Anlegen eines Unterdrucks von 10 mbar wurde der Kesselinhalt aufgeheizt, bei 340°C Kesselinnentemperatur begann Destillat anzufallen. Nach fünf Stunden fiel kein Destillat mehr an. Die Destillatmenge betrug insgesamt 28 kg. Das gelb gefärbte Destillat enthielt nach Phosphor-NMR-Analyse 55 Gew.-% Propanphosphonsäureanhydrid und 33 Gew.-% Propanphosphonsäure.

## Patentansprüche

1. Verfahren zur Reingewinnung von Propanphosphonsäureanhydrid, dadurch gekennzeichnet, daß man rohes, verunreinigtes Propanphosphonsäureanhydrid mit einem mittleren Polymerisationsgrad von 20 bis 200, das weniger als 0,5 Gew.-% Wasser enthält, durch Erhitzen auf 230 bis 300°C bei einem Druck von 0,1 bis 100 mbar destilliert, wobei reines Propanphosphonsäureanhydrid mit einem mittleren Polymerisationsgrad von 20 bis 60 erhalten wird.

2. Verfahren nach Anspruch 1, dadurch gekennzeichnet, daß das rohe, verunreinigte Propanphosphonsäureanhydrid durch Umanhydrisierung von Propanphosphonsäure mit Essigsäureanhydrid erhalten wird.

3. Verfahren nach Anspruch 1 oder 2, dadurch gekennzeichnet, daß der Wasseranteil in dem rohen Propanphosphonsäureanhydrid weniger als 0,2 Gew.-%, vorzugsweise weniger als 0,1 Gew.-%, beträgt.

4. Verfahren nach einem oder mehreren der Ansprüche 1 bis 3, dadurch gekennzeichnet, daß man bei Temperaturen von 250 bis 290°C, vorzugsweise von 260 bis 280°C, arbeitet.

5. Verfahren nach einem oder mehreren der Ansprüche 1 bis 4, dadurch gekennzeichnet, daß man bei einem Druck von 1 bis 30 mbar arbeitet.

## Claims

1. A process for the preparation of pure propanephosphonic anhydride, which comprises distilling crude, impure propanephosphonic anhydride having an average degree of polymerization of 20 to 200 and comprising less than 0.5% by weight of water by heating at 230 to 300°C under a pressure of 0.1 to 100 mbar, pure propanephosphonic anhydride having an average degree of polymerization of 20 to 60 being obtained.

2. The process as claimed in claim 1, wherein the crude, impure propanephosphonic anhydride is obtained by transanhydridation of propanephosphonic acid with acetic anhydride.

3. The process as claimed in claim 1 or 2, wherein the water content in the crude propanephosphonic anhydride is less than 0.2% by weight, preferably less than 0.1% by weight.

4. The process as claimed in one or more of claims 1 to 3, wherein the process is carried out at temperatures from 250 to 290°C, preferably from 260 to 280°C.

5. The process as claimed in one or more of claims 1 to 4, wherein the process is carried out under a pressure of 1 to 30 mbar.

## Revendications

1. Procédé pour la preparation de l'anhydride de l'acide propanephosphonique pure, caractérisé en ce que l'on distille de l'anhydride de l'acide propanephosphonique souillé, brut ayant un degré moyen de polymérisation de 20 à 200, qui contient moins de 0,5% en poids d'eau, par chauffage à une température de 230 à 300°C sous une pression de 0,1 à 100 mbar, ce grâce à quoi on obtient l'anhydride de l'acide propanephosphonique pur avec un degré moyen de polymérisation de 20 à 60.

2. Procédé selon la revendication 1, caractérisé en ce que l'anhydride de l'acide propanephosphonique souillé, brut est obtenu par "transanhydridation" de l'acide propanephosphonique par l'anhydride acétique.

3. Procédé selon la revendication 1 ou 2, caractérisé en ce que la proportion d'eau dans l'anhydride de l'acide propanephosphonique brut est inférieure à 0,2% en poids, de préférence inférieure à 0,1% en poids.

4. Procédé selon l'une ou plusieurs des revendications 1 à 3, caractérisé en ce qu'on travaille à des températures de 250 à 290°C, de préférence de 260 à 280°C.

5. Procédé selon l'une ou plusieurs des revendications 1 à 4, caractérisé en ce qu'on travaille sous une pression de 1 à 30 mbar.
